# EUROPEAN PATENT APPLICATION

(11) **EP 2 629 413 A1**
(43) Date of publication of application: **21.08.2013**
(21) Application number: 12155403.4
(22) Date of filing: 14.02.2012
(51) Int. Cl.: H02M 7/48, H02M 7/49, B60L 9/30, B60L 1/00

(54) **Supply of electric power within in a track-bound electric vehicle by means of modular multilevel converters**

(71) Applicant: Bombardier Transportation GmbH, 10785 Berlin (DE)
(72) Inventor: Sandberg, Åsa, SE-722 40 Västeraas (SE); Christensson, Åke, SE-724 63 Västeraas (SE); Nee, Hans-Peter, SE-197 34 Bro (SE)
(74) Representative: Olsson, Jan

(57) **Abstract**

An arrangement for supply of electric power within a track-bound electric vehicle (101) comprises a direct voltage source, a converter (106, 109) configured to convert said direct voltage to an alternating voltage and conversely and a control unit (107, 110) configured to control said converter. The converter (106, 109) is of the multi-level type having for each phase leg a series connection of switching cells including energy storing capacitors.

## Description

### TECHNICAL FIELD OF THE INVENTION AND BACKGROUND ART

The present invention relates to an arrangement for supply of electric power within a track-bound electric vehicle comprising a direct voltage source, a converter configured to convert said direct voltage to an alternating voltage and conversely, and a control unit configured to control said converter, as well as a track-bound vehicle having such an arrangement.

"Track-bound electric vehicle" comprises vehicles as well as vehicles with externally generated electrical power supplied via a current collector as well as vehicles with the electrical power internally from a generator driven by a diesel engine or an internal combustion engine. The externally generated power may come either from an AC-supply line or a DC-supply line.

Said converter may be located in different positions within a said arrangement for supply of electric power within a said vehicle and being configured to supply electric power to a motor used to drive the vehicle, to feed electric appliances, such as through socket outlets arranged in said vehicle and a heating/cooling system of the vehicle, or being connected to a supply line for feeding power from said supply line to the vehicle or, when braking the vehicle, from the vehicle to the supply line.

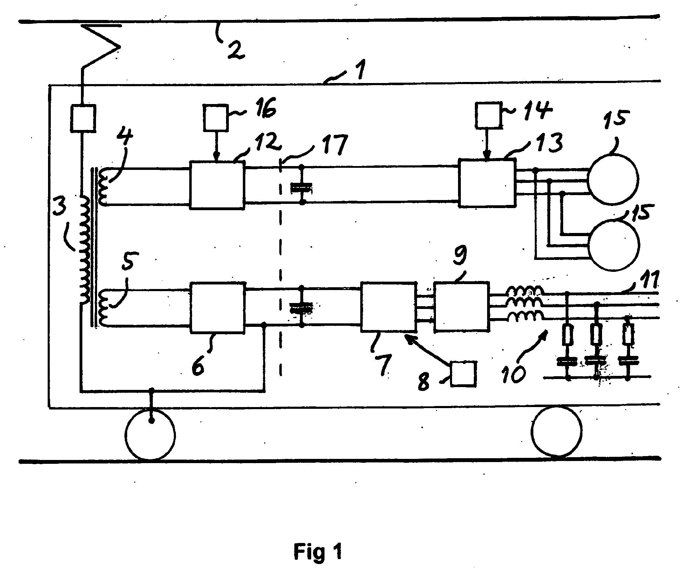

Fig 1 illustrates schematically how these three types of converters may be arranged in a track-bound vehicle 1. It is shown how the vehicle is in this case configured to move along an AC-supply line 2, which accordingly acts as a AC source and which may for example carry a one-phase alternating voltage of 15 kV and 16 2/3 Hz and 25 kV and 50 Hz. The vehicle has a transformer 3 for transforming the voltage from the supply line 2 to a suitable level. The transformer has here two secondary windings 4, 5, one of which being connected to a converter 6 for delivering a direct voltage of for example 1.5 - 3 kV on the output thereof. This direct voltage is delivered to a converter acting as an auxiliary inverter 7, which is controlled by a control unit 8 for generating a train of pulses according to a Pulse Width Modulation pattern for delivering a three-phase alternating voltage on the output thereof. The output of the inverter is connected to a three-phase transformer 9 as well as harmonic filters 10 for smoothing out the alternating voltage delivered by a distribution network 11 to socket outlets arranged in the track-bound vehicle, such as for connection of computers, and to lighting, heating and other appliances.

The other secondary winding 4 of the transformer 3 is connected to a converter 12 configured to deliver a direct voltage on the output thereof to the input of a converter acting as a motor inverter 13 controlled by a control unit 14 in a similar manner as the control carried out by the control unit 8 for delivering a three-phase alternating voltage on the output thereof to motors 15 in the form of electric machines, such as the stator windings of these motors, for driving the vehicle. The control unit 14 will receive orders from the driver of the vehicle for adapting the frequency of the voltage delivered to the stator windings of the motors to the vehicle speed being desired. In the case of braking the vehicle electric power will flow in the direction from the motors to the AC-supply line 2 through the line converter 12 then acting as an inverter controlled through a control unit 16 to deliver a single phase alternating voltage on the output thereof.

The invention is just as well directed to arrangements to be used in vehicles fed by a power supply line in the form of a DC source, and in such a case the part to the left of the dashed line 17 in Fig 1 is replaced by less complex equipment, but the direct voltage supply line will then be connected to the direct voltage side of the converters 7 and 13 close to said dashed line 17. However, the DC-power supply line may alternatively be connected via a DC/DC-converter controlled by a control unit if the DC-power supply voltage is for example 3 kV for adjusting the voltage level to for example 1 500 V.

The control units 8, 14, 16 of these converters utilise a Pulse Width Modulation (PWM) scheme for controlling the converters. The converter produces voltage pulses on the outputs thereof with steep flanks resulting in high requirements on electrical insulations, such as in bearings, stator windings and so on. Furthermore, heavy and costly filters (only shown for the auxiliary inverter in Fig 1) may have to be connected to the outputs of these converters for removing low and high frequency harmonics resulting from the switching of components of the converters producing the pulses.

Furthermore, the conditions for such arrangements for supply of electric power within a track-bound electric vehicle differ a great deal from the conditions for stationary such arrangements for supply of electric power. The weight of components included in such an arrangement are of vital importance, since a reduction of that weight means a reduction of the power needed for driving the vehicle. Furthermore, a vehicle has a restricted total volume, so that a saving of space required for components of a said arrangement results in more space for other type of equipment, passengers, fuel or the like.

### SUMMARY OF THE INVENTION

The object of the present invention is to provide an arrangement of the type defined in the introduction being improved in at least some aspect with respect to such arrangements already known while to at least some extent addressing any of the problems disclosed above.

This object is according to the invention obtained by providing such an arrangement, which is characterized in that said converter has at least one phase leg connecting to opposite poles of a direct voltage side of the converter connected to said direct voltage source, said phase leg comprising a series connection of switching cells, each said switching cell having on one hand at least two semiconductor assemblies connected in series and having each either a semiconductor device of turn-off type and a free-wheeling diode connected in parallel therewith or a reverse conducting switch and on the other at least one energy storing capacitor as well as two terminals connecting the cell to adjacent cells in said series connection of switching cells, a mid point of said series connection of switching cells forming a phase output being configured to be connected to an alternating voltage side of the converter, and that said control unit is configured to control said semiconductor devices or reverse conducting switches of each switching cell so as to obtain, for that switching cell, one of at least two switching states, namely a first switching state and a second switching state, in which the voltage across said at least one energy storing capacitor and a zero voltage, respectively, is applied across the terminals of the switching cell, for obtaining a determined alternating voltage on said phase output.

Thus, the present invention is based on the realization that a converter of the type known through for example DE 101 03 031 A1 and WO 2007/023064 A1 and normally called a multi-cell converter or M2LC, has features resulting in a number of advantages when used in an arrangement for supply of electric power within a track-bound electric vehicle. Said switching cells of the converter may be so-called half bridges or full bridges, and it is for instance possible that each switching cell has more than one said energy storing capacitor as long as it is possible to control the switching cell to be switched between at least said two states. In the case of the full bridge there will be three possible states with +U_{DC}, -U_{DC} and 0 applied across the terminals of the cell, in which U_{DC} is the voltage across said at least one energy storing capacitor. Said free-wheeling diode may be integrated in the same chip as the semiconductor device associated therewith or the semiconductor device may even have the function of a free-wheeling diode built in therein. Said reverse conducting switches are semiconductor switches having parts which may be turned on and off to make the switch to conduct in either direction therethrough.

One of said advantages is the possibility to arrange capacitors for energy storage where it is favourable for a uniform weight distribution in the vehicle. Such energy storage is required for railway vehicles for enabling a stable regulation at supply voltage interruptions due to bounces of current collector arms and neutral sections of the feeding. An intermediate link capacitor is in known arrangements used for such energy storage. This has to be of low inductance and must have a low inductive connection to the converter, i.e. be arranged close thereto and have certain means for connection thereto. The converter in an arrangement according to the invention may do without such an intermediate link capacitor, since the direct voltage between the poles may be maintained by the energy storing capacitors of the switching cells. This means that capacitors for energy storage may be arranged where it is preferred from a weight distribution or space demand view.

In a multi-level converter of this type said switching cells may be controlled to change between said states so as to already at said phase output obtain an alternating voltage being very close to a sinusoidal voltage resulting in a lower level of harmonics emitted from the converter than from voltage source converters controlled through a PWM scheme. This reduces the need of measures for shielding the emission of harmonics and other measures for reducing the effect thereof, since the regulation of emissions from traction equipment are very severe for not negatively influencing railway technique appliances as track circuits (safety against vehicle collisions), communication radio and other technique as radio and mobile wireless networks.

Furthermore, the lower content of harmonics in the voltage reduces the size needed for harmonic filters and also the losses within a said arrangement resulting in lower costs and volume and weight for equipment, such as transformers and motors of the vehicle.

Moreover, a said converter is beneficial to the size and cost of magnetic components such as the motor, since the switchings can be restricted to a combination of voltage gradient and voltage step magnitude below the level causing partial discharges across such an insulation. This is of particular importance in track-bound electric vehicles since high temperatures may arise in at least some parts of a said arrangement due to stress as a consequence of varying loads thereon, which may result in high temperature to be taken by for instance electrical insulation of conductors in such an arrangement. Insulation material properties present a compromise between temperature tolerance on one side, partial discharge resistance on the other side. Insulation materials resistant to partial discharge are more costly, require more space and reduce the cooling efficiency of the stator winding.

The use of a converter having said switching cells also results in a possibility to modularization. This enables an efficient production of such an arrangement for a track-bound vehicle and standardization of components also between systems having different level of the supplied voltage. This means a reduced cost for both hardware and construction hours associated with converters.

A further advantage is due to the fact that track-bound vehicles have system voltages being higher than is normally the case for industrial drives and other applications with similar other demands but higher market volumes, for instance wind power and drive systems for the car industry. The use of a multi-level converter enables the use of components for these more usual voltage levels also in track-bound vehicles resulting in an increased availability and lower costs.

According to an embodiment of the invention the arrangement comprises means for connecting the arrangement to an AC source or receiver, such as an AC-supply line. An AC-supply line may act as a said AC receiver by being able to absorb surplus power, e.g. when the vehicle is braking. According to a further development of this embodiment said connecting means is configured to connect an alternating voltage side of said converter to a said AC source or receiver, in which said connecting means may comprise a transformer configured to be connected by the primary winding thereof to a said AC source or receiver and through the secondary winding thereof to said phase output of said converter. The direct voltage on the direct voltage side of the converter may by this be given a magnitude suited for an intermediate link used for further conversion for power to a motor driving the vehicle or auxiliary equipment of the vehicle.

According to another embodiment of the invention said connecting means comprises a frequency converter configured to connect the arrangement through a first side of the frequency converter to said AC source or receiver and which has a second side connected to a primary winding of a transformer included in said connecting means, the secondary winding of the transformer is connected to said phase output of said converter, and the arrangement comprises means configured to control said frequency converter to increase the frequency of the voltage on the transformer side thereof with respect to the voltage on the AC source or receiver side thereof. The use of such a frequency converter in said connecting means results in an increased fundamental frequency of the voltage available on the phase output of a said converter which makes it possible to reduce the size of inductances, such as transformers and filters, of a said arrangement.

According to another embodiment of the invention said frequency converter comprises two said converters with a first converter connected through an alternating voltage side thereof to said AC source or receiver and the direct voltage side thereof to the direct voltage side of a second of these two converters having the alternating voltage side thereof connected to said transformer. This is a favourable way of obtaining an increased fundamental frequency of the alternating voltage and the advantages associated therewith.

According to another embodiment of the invention the arrangement comprises means for connecting the arrangement to a DC source or receiver, such as a DC-supply line. These connecting means may then be configured to connect a direct voltage side of said converter to a said DC source or receiver.

According to a further development of the embodiment last mentioned the arrangement comprises a further said converter configured to connect through said phase output thereof to the phase output of said converter to be connected to a said DC source or receiver. This means that the level of the direct voltage from the converter remote to said DC source or receiver, such as a DC-supply line, may be changed, mostly lowered. Additionally, the alternating voltage may on the alternating voltage side of the converter to be connected to said DC source or receiver be given a comparatively high fundamental frequency reducing the size of inductive components arranged between said two converters.

According to a further development of the embodiment last mentioned the phase output of said converter to be connected to a said DC source or receiver is connected to a primary winding of a transformer having the secondary winding connected to the phase output of said further converter thus resulting in a line power conversion with galvanic isolation, and the size of said transformer may be reduced if the fundamental frequency of the voltage from the converter connecting to the primary winding thereof is increased.

According to another embodiment of the invention the arrangement has a first converter configured to be connected by the direct voltage side thereof to said DC source or receiver and by the alternating voltage side thereof to the primary winding of a transformer and a second converter having the alternating voltage side thereof connected to the secondary winding of the transformer, at least one of said first and second converter is a converter according to claim 1 enclosed, and the direct voltage side of said first converter has one terminal connected to the DC source or receiver, such as a DC-supply line, and the other terminal directly connected to one terminal of the direct voltage side of said second converter, the other terminal of the direct voltage side of the second converter being connected to a current return conductor of the vehicle. Accordingly, a so called MFDC (Middle Frequency Direct Current) converter is here used for delivering a direct voltage at the output of said second converter for feeding at least one further converter, e.g. a DC/AC converter which may be used to obtain a three phase alternating voltage for motors or other equipment on the vehicle. This direct voltage on the output of the second converter will then be half the direct voltage on the input from the DC source or receiver in the case of a 1:1 transformation of said transformer. Thus, a voltage transformation may here be obtained by switchings at frequencies resulting in a fundamental frequency being higher than for PWM-controlled converters reducing the size of the transformer. This is especially the case if wide band gap materials, such as SiC, are used in the semiconductor devices or reverse conducting switches in said at least one converter as according to another embodiment of the invention disclosed below.

According to another embodiment of the invention the arrangement comprises a said converter having the direct voltage side thereof connected to the direct voltage side of another such converter, said other converter has three phase legs, and said control unit is configured to control said other converter to deliver a three phase alternating voltage on the alternating voltage side thereof. A three phase alternating voltage with a shape close to sinusoidal will thanks to the type of converter used then be received on the phase output of each phase requiring no or only small filters.

According to an embodiment of the invention the arrangement comprises means configured to connect the alternating voltage side of said other converter, i.e. said three phase alternating voltage, to a motor used to drive the vehicle. The fundamental frequency of the three phase alternating voltage may by use of this type of converter be increased, so that the pole number of a said motor may be increased, which results in a better utilization of material for geometrical reasons. This means that the volume and weight of a said motor for a determined maximum torque to be delivered thereby may be reduced. Furthermore, each voltage step, i.e. the voltage across said at least one energy storing capacitor of each switching cell, of a said converter may be selected to be considerably lower than for conventional voltage source converters controlled by PWM, so that this voltage step will be lower than the ignition voltage for PD (Partial Discharges), so that such partial discharges between windings of a stator winding of the motor will be avoided independently of dV/dt, i.e. how steep the flanks of the voltage pulses produced by the switchings of the converters will be. This means that the insulation material used in a motor of such a vehicle has not to be of the expensive and voluminous type able to withstand partial discharges in addition to the high temperatures occasionally occurring as a consequence of the stress caused by varying loads on such motors.

According to another embodiment of the invention the arrangement comprises means configured to connect the alternating voltage side of said other converter so as to use said alternating voltage to feed electric appliances, such as through socket outlets arranged in said vehicle and a heating/cooling system of the vehicle. Thus, said other converter in such an arrangement is then used as an auxiliary inverter, and this use will also benefit from the advantages of this type of converter disclosed above.

According to another embodiment of the invention the arrangement comprises a said converter configured to act as a line converter so as to in a driving mode of said vehicle absorb electrical power on its AC side from the AC source or receiver, rectify it and deliver it on its DC side and in a braking mode of the vehicle operate as an inverter, feeding power through said phase output thereof to an AC-supply line for track-bound vehicles.

According to another embodiment of the invention the arrangement comprises at least one said converter having said semiconductor devices of turn-off type or reverse conducting switches made of a material having a band gap between the valence band and the conduction band exceeding 2.2 eV, such as SiC or GaN. Semiconductor devices of these wide band gap materials may be switched quicker and with lower switching losses than such semiconductor devices of conventional materials, such as Si. As already stated, a higher dV/dt resulting from the quicker switching may be accepted thanks to the lower levels of the voltage steps in such a converter. Furthermore, semiconductor devices of turn-off type or reverse conducting switches of these materials are firstly available for lower breakdown voltages than required for conventional two level converters adapted to the typical system voltages being used for track-bound vehicles. However, these favourable components may be used in an arrangement according to the present invention thanks to the lower voltages across each switching cell of the converters.

The invention also relates to a use of an arrangement according to the present invention for feeding electric power between an electric supply line and a said track-bound electric vehicle, to feed a motor driving a said vehicle or electric appliances by having a said converter operating as an auxiliary inverter, as well as a track-bound vehicle having an arrangement according to the present invention for supply of electric power within the vehicle resulting in a number of advantages disclosed above, such as reduction of weight and costs.

Further advantages as well as advantageous features of the invention will appear from the following description of embodiments of the invention.

### BRIEF DESCRIPTION OF THE DRAWINGS

With reference to the appended drawings, below follows a specific description of embodiments of the invention cited as examples. In the drawings:
- Fig 1: is a very schematic view illustrating a typical appearance of an arrangement for supply of electric power within a track-bound electric vehicle and how this may be connected to an electric power supply line, motors driving the vehicle and electric appliances arranged in the vehicle,
- Fig 2: is a simplified circuit diagram illustrating the structure of a converter of the type used in an arrangement according to the present invention,
- Fig 3 and 4: illustrate two different types of switching cells, which may be a part of a converter shown in Fig 2, and
- Fig 5-11: are very schematic views illustrating an arrangement according to six different embodiments of the present invention.

### DETAILED DESCRIPTION OF EMBODIMENTS OF THE INVENTION

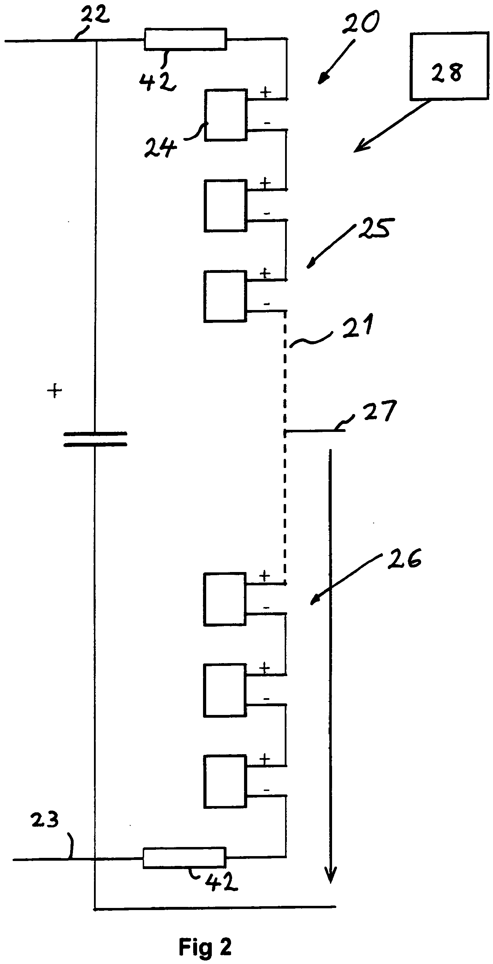

Fig 2 illustrates very schematically the general construction of a Voltage Source Converter 20 of the type included in an arrangement for supply of electric power within a track-bound vehicle according to the present invention. This converter has here one phase leg 21 connected to opposite poles 22, 23 of a direct voltage side of the converter. The phase leg 21 comprises a series connection of switching cells 24 indicated by boxes, for instance 4, 8, 12 or 16 to the number, and this series connection is divided into two equal parts, an upper valve branch 25 and a lower valve branch 26, separated by a midpoint 27 forming a phase output being configured to be connected to an alternating voltage side of the converter. A control unit 28 is arranged for controlling the switching cells 24 and by that the converter to convert direct voltage into alternating voltage and conversely. The boxes 42 illustrate inductors.

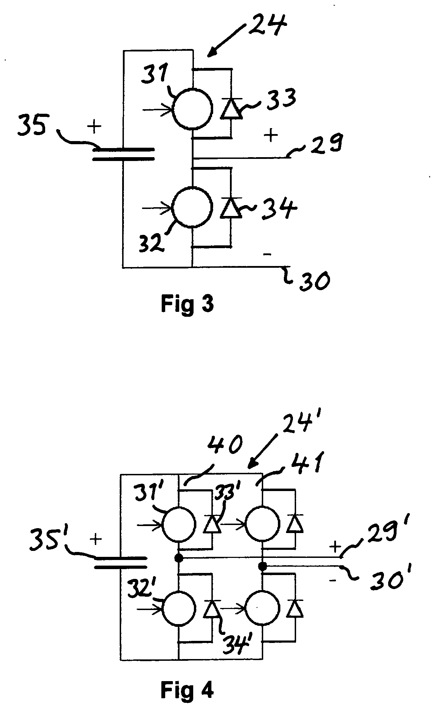

The converter has switching cells 24 of the type having on one hand at least two semiconductor assemblies with each a semiconductor device of turn-off type, and a free-wheeling diode connected in parallel therewith and on the other at least one energy storing capacitor, and an example of such a switching cell of the so-called half bridge type is shown in Fig 3. The terminals 29, 30 of the switching cell are adapted to be connected to adjacent switching cells in the series connection of switching cells forming a phase leg. The semiconductor devices 31, 32 may for instance be IGBT:s connected in parallel with diodes 33, 34. Although only one semiconductor device and one diode is shown per assembly these may stand for a number of semiconductor devices and diodes, respectively, connected in parallel for sharing the current flowing through the assembly. An energy storing capacitor 35 is connected in parallel with the respective series connection of the diodes and the semiconductor devices. One terminal 29 is connected to the midpoint between the two semiconductor devices as well as the midpoint between the two diodes. The other terminal 30 is connected to the energy storing capacitor 35. Each semiconductor device and each diode shown in Fig 3 may be more than one connected in series for being able to handle the voltages to be handled, and the semiconductor devices so connected in series may then be controlled simultaneously so as to act as one single semiconductor device, i.e. switch.

The switching cell 24 shown in Fig 3 may be controlled to obtain one of a) a first switching state and b) a second switching state, in which for a) the voltage across the capacitor 35 and for b) a zero voltage is applied across the terminals 29, 30. For obtaining the first state the semiconductor device 31 is turned on and the semiconductor device 32 turned off. The switching cell is switched to the second state by changing the state of the semiconductor devices.

Fig 4 illustrates a switching cell 24' of the full bridge type, which also may be used in a converter shown in Fig 2. The switching cell 24' differs from that shown in Fig 3 by having two branches 40, 41 of a series connection of valves in the form of semiconductor devices of turn-off type connected in anti-parallel with diodes connected in parallel. The terminals 29', 30' are formed by a respective midpoint of each branch 40, 41. This means that the semiconductor devices of such a switching cell may be controlled to deliver a voltage of U_{DC}, -U_{DC} or 0 V, i.e. assume three switching states, across the terminals 29', 30', in which U_{DC} is the voltage across the energy storing capacitor 35'. The use of such a full bridge instead of a half bridge may be for better balancing the voltage on the direct voltage side of the converter at lower frequencies.

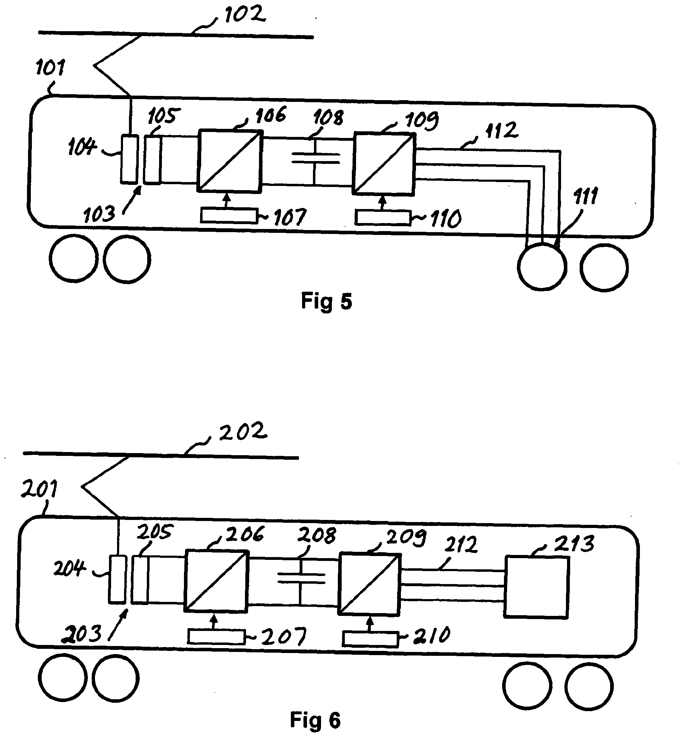

Fig 5 illustrates very schematically an arrangement for supply of electric power within a track-bound electric vehicle 101, which is here through a transformer 103 connected to an AC-supply line 102. The primary winding 104 of the transformer is connected to the supply line 102 and the secondary winding 105 is connected to the alternating voltage side of a converter of the type shown in Fig 2 and having submodules in the form of switching cells of the type shown in Fig 3 or 4. A control unit 107 is configured to control the converter 106 by controlling the semiconductor devices of the switching cells thereof for obtaining one of at least two switching states for each said switching cell, namely a first switching state and a second switching state, in which the voltage across said at least one energy storing capacitor and a zero voltage, respectively, is applied across the terminals of the switching cell. The direct voltage side of the converter 106 is connected to an intermediate link capacitor 108, but as already stated, such a capacitor for energy storing purposes may under certain conditions be omitted, since the direct voltage may be maintained by the energy storing capacitors in the submodules of the converter. The direct voltage side of the converter 106 is connected to the direct voltage side of another similar converter 109, which has three phase legs and a control unit 110 is configured to control this other converter 109 to deliver a three phase alternating voltage on the alternating voltage side thereof. The alternating voltage side of the converter is here connected to a motor 111, which may represent a plurality of such motors, used to drive the vehicle. The control unit 110 controls the converter 109 to deliver an alternating voltage with a varying frequency and amplitude for driving the motor.

Fig 6 illustrates an arrangement according to a second embodiment of the invention differing from that shown in Fig 5 by means 212 configured to connect the alternating voltage side of said other converter 209 so as to use this alternating voltage to feed electric appliances 213, such as through sockets arranged in said vehicle and a heating/cooling system of the vehicle. Thus, the control of said other converter 209 is here differently performed than the control of the other converter in the embodiment shown in Fig 5 and delivers here a fixed frequency, such as 50 Hz, and a fixed amplitude of the three phase alternating voltage.

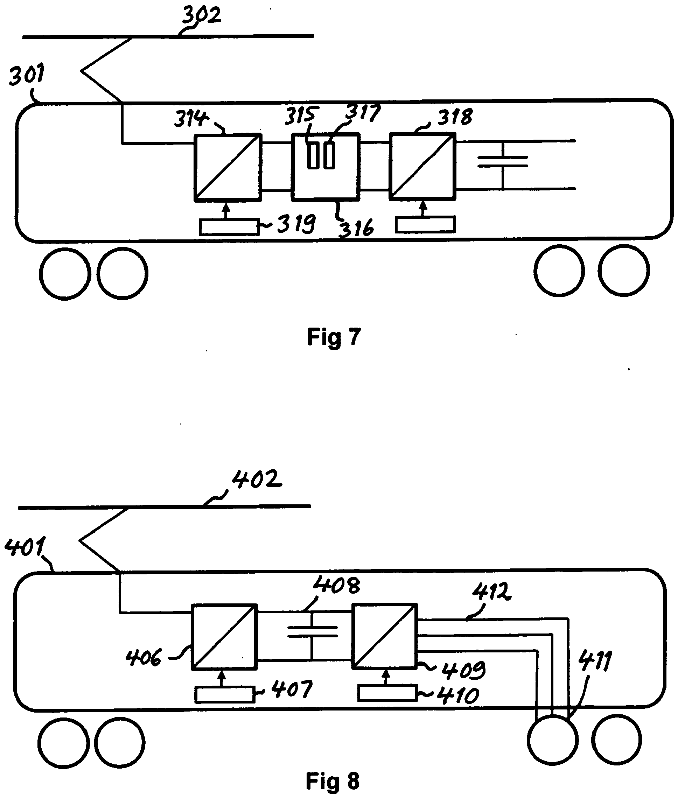

Fig 7 illustrates an arrangement according to a third embodiment of the invention having a frequency converter 314 configured to connect the arrangement through a first side of the frequency converter to the AC-supply line 302 and which has a second side connected to a primary winding 315 of a transformer 316. The secondary winding 317 of the transformer is connected to the phase output of a converter 318 of the type shown in Fig 2. It is possible to only provide galvanic isolation by the member symbolized by the box 316 without changing the magnitude of the voltage. A control unit 319 is configured to control the frequency converter to increase the frequency of the voltage on the transformer side thereof with respect to the voltage on the AC-supply line side thereof. An increased fundamental frequency of the direct voltage enables a reduction of the size of inductive members of the arrangement, such as the transformer 316.

The frequency converter 314 in the embodiment shown in Fig 7 may comprise two converters of the type shown in Fig 2 with a first converter connected through an alternating voltage side thereof to the AC-supply line and the direct voltage side thereof to the direct voltage side of a second of these two converters having the alternating voltage side thereof connected to the transformer 316.

A fourth embodiment of an arrangement according to the present invention is shown in Fig 8, and this differs from the embodiment shown in Fig 5 by having no transformer between the AC-supply line 402 and the line converter 406. Thus, the voltage driving the motor 411 has no galvanic isolation with respect to the voltage on the AC-supply line, and it has in this case to be possible to switch the voltage of the AC-supply line by the line converter 406. Furthermore, the winding of the motor has to be insulated to the level of the AC-supply line with respect to ground. The converter 409 is controlled to deliver a three phase alternating voltage with a varying frequency and amplitude to the motor 411.

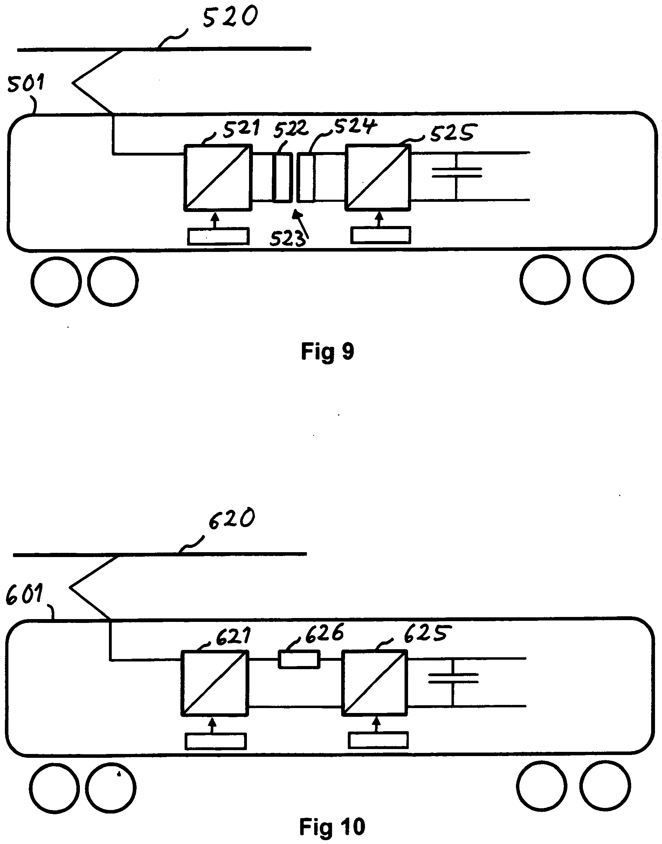

Fig 9 and 10 illustrates very schematically a fifth and a sixth embodiment of an arrangement according to the present invention configured to be connected to a DC-supply line 520 and 620, respectively. The arrangement according to Fig 9 has a converter 521 of the type shown in Fig 2 connected through a direct voltage side thereof to said DC-supply line 520 and through the alternating voltage side thereof to the primary winding 522 of a transformer 523 having the secondary winding 524 connected to the phase output of a further converter 525 of the type shown in Fig 2. The converter 521 is preferably controlled to deliver an alternating voltage having a comparatively high fundamental frequency to the transformer 523, which changes the level of the voltage, so that a direct voltage having another level than the direct voltage on the supply line 520 may be delivered on the direct voltage side of the converter 525. The transformer 523 provides line power conversion with galvanic isolation, whereas in the embodiment shown in Fig 10 the transformer is replaced by an inductor 626, so that line power conversion without galvanic isolation is carried out in that embodiment. The direct voltage side of the converters 525 and 625 in the embodiments shown in Fig 9 and 10 may be connected to the direct voltage side of a converter, such as a converter of the type shown in Fig 2, for delivering an alternating voltage to a motor or motors used to drive the vehicle and/or electric appliances, such as through sockets arranged in the vehicle and a heating/cooling system of the vehicle.

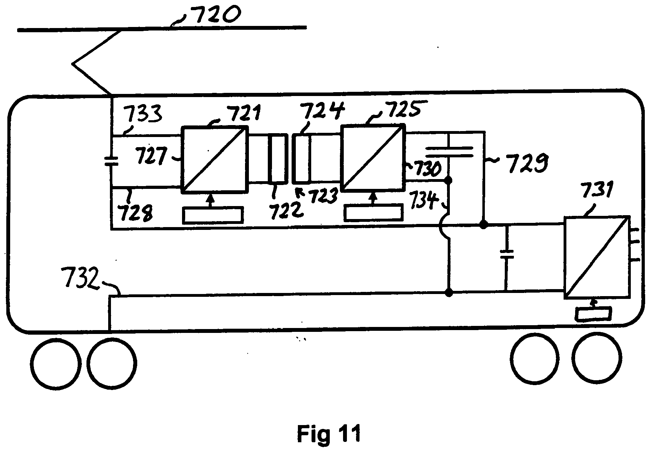

Fig 11 illustrates schematically an arrangement according to a seventh embodiment of the invention having a first converter 721 configured to be connected by the direct voltage side 727 thereof to a DC-line 720 and by the alternating voltage side thereof to the primary winding 722 of a transformer 723 and a second converter 725 having the alternating voltage side thereof connected to the secondary winding 724 of the transformer. The direct voltage side 727 of the first converter has one terminal 733 connected to the DC source or receiver 720 and the other terminal 728 directly connected to one terminal 729 of the direct voltage side 730 of the second converter 725, which has its other terminal 734 connected to the current return conductor 732 of the vehicle. At least one of said second and first converter is a converter of the type having said switching cells as defined in claim 1 of the present application. The first and second converter with transformer and control units do here form a so called MFDC-converter, which delivers a direct voltage on the output thereof, i.e. the output of the second converter 725, being half the voltage of the DC-supply line in the case of a transformer ratio of 1:1. This direct voltage may then be used by another converter 731, such as a motor converter, for delivering a three-phase alternating voltage to be used in the vehicle. Such a DC/DC-conversion may result in low losses and the size of the transformer may be kept small thanks to a high possible fundamental frequency of the voltage applied thereto. However, no galvanic isolation of the alternating voltage side of the converter 731 is here obtained by the transformer 723.

The invention is of course not in any way restricted to the embodiments thereof described above, but many possibilities to modifications thereof would be apparent to a person skilled in the art without departing from the scope of the invention as defined in the appended claims.

The figures are very schematic, and the arrangements may have a number of components not shown, such as transformers on the three-phase side of the converters in Figs 5, 6 and 8 and harmonic filters.

Arrangements according to the invention may besides at least one converter of the type shown in Fig 2 have converters of other types, such as voltage source converters controlled by PWM.

"Direct voltage source" as used in the claims is to be interpreted to cover any type of equipment in which a direct voltage occurs during operation thereof. It may for example be a DC-supply line or a direct voltage emanating from an AC/DC-converter connected to a diesel engine or to an AC-supply line.

## Claims

1. An arrangement for supply of electric power within a track-bound electric vehicle comprising
• a direct voltage source,
• a converter (106, 109, 206, 209, 318, 406, 409, 521, 525, 621, 625) configured to convert said direct voltage to an alternating voltage and conversely, and
• a control unit (107, 110, 207, 210, 310, 407, 410, 507, 510, 607, 610) configured to control said converter, **characterized in that** said converter has at least one phase leg (21) connecting to opposite poles (22, 23) of a direct voltage side of the converter connected to said direct voltage source, said phase leg comprising a series connection of switching cells (24, 24'), each said switching cell having on one hand at least two semiconductor assemblies connected in series and having each either a semiconductor device (31, 32, 31', 32') of turn-off type and a free-wheeling diode (33, 34, 33', 34') connected in parallel therewith or a reverse conducting switch and on the other at least one energy storing capacitor (35, 35') as well as two terminals (29, 30, 29', 30') connecting the cell to adjacent cells in said series connection of switching cells, a mid point of said series connection of switching cells forming a phase output (27) being configured to be connected to an alternating voltage side of the converter, and that said control unit is configured to control said semiconductor devices or reverse conducting switches of each switching cell so as to obtain, for that switching cell, one of at least two switching states, namely a first switching state and a second switching state, in which the voltage across said at least one energy storing capacitor (35, 35') and a zero voltage, respectively, is applied across the terminals (29, 30, 29', 30') of the switching cell, for obtaining a determined alternating voltage on said phase output.

2. An arrangement according to claim 1, **characterized in that** it comprises means (103, 314) for connecting the arrangement to an AC- source or receiver, such as an AC-supply line (102, 302).

3. An arrangement according to claim 2, **characterized in that** said connecting means is configured to connect an alternating voltage side of said converter to a said AC source or receiver.

4. An arrangement according to claim 3, **characterized in that** said connecting means comprises a transformer (103) configured to be connected by the primary winding (104) thereof to a said AC source or receiver and through the secondary winding (105) thereof to said phase output of said converter.

5. An arrangement according to claim 3, **characterized in that** said connecting means comprises a frequency converter (314) configured to connect the arrangement through a first side of the frequency converter to said AC source or receiver and which has a second side connected to a primary winding (315) of a transformer (316) included in said connecting means, that the secondary winding (317) of the transformer is connected to said phase output of said converter (318), and that the arrangement comprises means (319) configured to control said frequency converter to increase the frequency of the voltage on the transformer side thereof with respect to the voltage on the AC source or receiver side thereof.

6. An arrangement according to claim 5, **characterized in that** said frequency converter (314) comprises two said converters with a first converter connected through an alternating voltage side thereof to said AC source or receiver (302) and the direct voltage side thereof to the direct voltage side of a second of these two converters having the alternating voltage side thereof connected to said transformer (316).

7. An arrangement according to claim 1, **characterized in that** it comprises means for connecting the arrangement to a DC source or receiver, such as a DC-supply line (520, 620).

8. An arrangement according to claim 7, **characterized in that** said connecting means is configured to connect a direct voltage side of said converter (521, 621) to a said DC source or receiver.

9. An arrangement according to claim 8, **characterized in that** it comprises a further said converter (525, 625) configured to connect through said phase output thereof to the phase output of said converter (521, 621) to be connected to a said DC source or receiver.

10. An arrangement according to claim 9, **characterized in that** said phase output of said converter (521) to be connected to a said DC source or receiver is connected to a primary winding (522) of a transformer (523) having the secondary winding (524) connected to the phase output of said further converter (525).

11. An arrangement according to any of claims 7-10, **characterized in that** it has a first converter (721) configured to be connected by the direct voltage side (727) thereof to said DC source or receiver (720) and by the alternating voltage side thereof to the primary winding (722) of a transformer (723) and a second converter (725) having the alternating voltage side thereof connected to the secondary winding (724) of the transformer, that at least one of said first and second converter is a converter according to claim 1, and that the direct voltage side (727) of said first converter (721) has one terminal (733) connected to said DC source or receiver (720) and the other terminal (728) directly connected to one terminal (729) of the direct voltage side (730) of said second converter (725), the other terminal (734) of the direct voltage side (730) of the second converter (725) being connected to a current return conductor (732) of the vehicle.

12. An arrangement according to any of the preceding claims, **characterized in that** it comprises a said converter (106, 206, 406) having the direct voltage side thereof connected to the direct voltage side of a another such converter (109, 209, 409), that said other converter has three said phase legs, and that said control unit (110, 210, 410) is configured to control said other converter to deliver a three phase alternating voltage on the alternating voltage side thereof.

13. An arrangement according to claim 12, **characterized in that** it comprises means (112, 412) configured to connect the alternating voltage side of said other converter to a motor (111, 411) used to drive the vehicle.

14. An arrangement according to claim 12 or 13, **characterized in that** it comprises means (212) configured to connect the alternating voltage side of said other converter (209) so as to use said alternating voltage to feed electric appliances (213), such as through socket outlets arranged in said vehicle and a heating/cooling system of the vehicle.

15. An arrangement according to any of claims 1-7 and 12-14, **characterized in that** it comprises a said converter (106, 206, 406) configured to act as a line converter so as to in a driving mode of said vehicle absorb electrical power on its AC side from the AC source or receiver, rectify it and deliver it on its DC side and in a braking mode of the vehicle operate as an inverter, feeding power through said phase output thereof to an AC-supply line (102, 202, 402) for track-bound vehicles.

16. An arrangement according to any of the preceding claims, **characterized in that** it comprises at least one said converter having said semiconductor devices (31, 32, 31', 32') of turn-off type or reverse conducting switches made of a material having a band gap between the valence band and the conduction band exceeding 2.2 eV, such as SiC or GaN.

17. Use of an arrangement according to any of the preceding claims for feeding electric power between an electric supply line (102, 202, 302, 402, 502, 602) and a said track-bound electric vehicle (101, 201, 301, 401, 501, 601), to feed a motor (111, 411) driving a said vehicle or electric appliances (213) by having a said converter operating as an auxiliary inverter.

18. A track-bound vehicle having an arrangement for supply of electric power within the vehicle according to any of claims 1-16.
